(19) Europäisches Patentamt
European Patent Office
Office européen des brevets

(11) **EP 2 184 938 A1**

(12) **EUROPEAN PATENT APPLICATION**

(43) Date of publication:
**12.05.2010 Bulletin 2010/19**

(51) Int Cl.:
***H04W 48/18*** (2009.01)

(21) Application number: **10155062.2**

(22) Date of filing: **07.03.2007**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **07.03.2006 US 780270 P
27.07.2006 US 494868**

(62) Document number(s) of the earlier application(s) in
accordance with Art. 76 EPC:
**07758104.9 / 1 999 987**

(71) Applicant: **QUALCOMM Incorporated
San Diego, CA 92121-1714 (US)**

(72) Inventors:
• **Umatt, Bhupesh Manoharlal
San Diego, 92121-1714 (US)**

• **Mittal, Vineet
San Diego, 92121-1714 (US)**

(74) Representative: **Heselberger, Johannes
Patent- und Rechtsanwälte
Bardehle - Pagenberg - Dost
Altenburg - Geissler
Galileiplatz 1
81679 München (DE)**

Remarks:
This application was filed on 01-03-2010 as a
divisional application to the application mentioned
under INID code 62.

(54) **Method and apparatus for searching radio technologies**

(57) Techniques to improve searches for wireless networks are described. A terminal uses results of a search for one radio technology to reduce the search space for another search for the same radio technology or a different radio technology. In one scheme, a first search for a first radio technology (e.g., GSM) is initially performed, and search results indicating frequency channels acquired for the first radio technology are obtained.

A second search for a second radio technology (e.g., W-CDMA) is performed using the results of the first search to omit frequencies from the second search. In another scheme, acquisition is performed on at least one frequency channel previously acquired for a radio technology (e.g., W-CDMA). A search for the radio technology is then performed using results of the acquisition to omit frequencies from the search.

FIG. 1

EP 2 184 938 A1

**Description**

**BACKGROUND**

**Related Applications**

This application claims priority to U.S. Provisional Application No. 60/780,270 filed March 7, 2006.

**I. Field**

The present disclosure relates generally to communication, and more specifically to techniques for searching radio technologies.

**II. Background**

Wireless communication networks are widely deployed to provide various communication services such as voice, packet data, broadcast, messaging, and so on. These wireless networks may be capable of supporting communication for multiple users by sharing the available network resources. Examples of such wireless networks include Code Division Multiple Access (CDMA) networks, Time Division Multiple Access (TDMA) networks, and Frequency Division Multiple Access (FDMA) networks. These wireless networks may also utilize various radio technologies such as Wideband-CDMA (W-CDMA), cdma2000, Global System for Mobile Communications (GSM), and so on, which are known in the art.

A terminal may be capable of communicating with different wireless networks such as W-CDMA and GSM networks. The terminal may perform searches to find wireless networks from which the terminal can obtain service. The terminal may first search a frequency band to look for wireless networks of a particular radio technology (e.g., W-CDMA), then perform another search of the same frequency band to look for wireless networks of another radio technology (e.g., GSM), and then generate a list of all wireless networks found by the searches. The search for each radio technology may be time consuming, e.g., on the order of minutes for a crowded frequency band in which many wireless networks may be operating. The long search time may cause excessive delay in reporting the search results.

There is therefore a need in the art for improved searching of wireless communication networks.

**SUMMARY**

Techniques to improve searches for wireless networks are described herein. In general, a terminal may use results of a search for one radio technology to reduce the search space for another search for the same radio technology or a different radio technology.

In an embodiment, a first search for a first radio technology (e.g., GSM) is initially performed, and search results indicating frequency channels acquired for the first radio technology are obtained. A second search for a second radio technology (e.g., W-CDMA) is then performed using the results of the first search to omit frequencies from the second search. For example, the second search may omit a range of frequencies around each frequency channel that has been successfully acquired for the first radio technology.

In another embodiment, acquisition is performed on at least one frequency channel previously acquired for a radio technology (e.g., W-CDMA). A search for the radio technology is then performed using results of the acquisition to omit frequencies from the search. The omitted frequencies may include (1) the center frequency of each frequency channel not successfully acquired and (2) a range of frequencies for each frequency channel successfully acquired.

Various aspects and embodiments of the invention are described in further detail below.

**BRIEF DESCRIPTION OF THE DRAWINGS**

Aspects and embodiments of the invention will become more apparent from the detailed description set forth below when taken in conjunction with the drawings in which like reference characters identify correspondingly throughout.

FIG. 1 illustrates a deployment with a GSM network and a Universal Mobile Telecommunication System (UMTS) network.

FIG. 2 illustrates protocol layers for GSM and UMTS.

FIG. 3 illustrates a manual search process.

FIG. 4 illustrates coarse and fine frequency scans for UMTS.

FIG. 5 illustrates frequencies omitted based on GSM search results.

FIG. 6 illustrates a manual search process for GSM and UMTS.

FIG. 7 illustrates frequencies omitted based on acquisition database search results.

FIG. 8 illustrates a search process with an acquisition database search.

FIG. 9 illustrates an automatic search process for GSM and UMTS.

FIG. 10 illustrates a search process to obtain service from a wireless network.

FIG. 11 illustrates a search process for multiple radio technologies.

FIG. 12 illustrates a search process for a radio technology.

FIG. 13 illustrates a block diagram of a terminal.

## DETAILED DESCRIPTION

The word "exemplary" is used herein to mean "serving as an example, instance, or illustration." Any embodiment or design described herein as "exemplary" is not necessarily to be construed as preferred or advantageous over other embodiments or designs.

The search techniques described herein may be used for various wireless communication networks such as UMTS networks, GSM networks, cdma2000 networks, and so on. The terms "network" and "system" are often used interchangeably. A GSM network utilizes GSM for air interface and Mobile Application Part (MAP) for core network. A UMTS network utilizes W-CDMA for air interface and MAP for core network. The terms "air interface", "radio technology" and "radio access technology" are often used interchangeably. The terms "W-CDMA" and "UMTS" are also often used interchangeably. GSM is a second-generation (2G) radio technology that can provide voice service and low to medium rate packet data service. W-CDMA is a third-generation (3G) radio technology that can provide enhanced services and capabilities, e.g., higher data rates, concurrent voice and data calls, and so on. GSM and W-CDMA are described in documents from an organization named "3rd Generation Partnership Project" (3GPP), which are publicly available. In general, a wireless network may utilize any radio technology such as W-CDMA, GSM, cdma2000, or some other radio technology. A network operator/service provider may deploy one or more wireless networks of one or more radio technologies. For clarity, the search techniques are described below for GSM and UMTS.

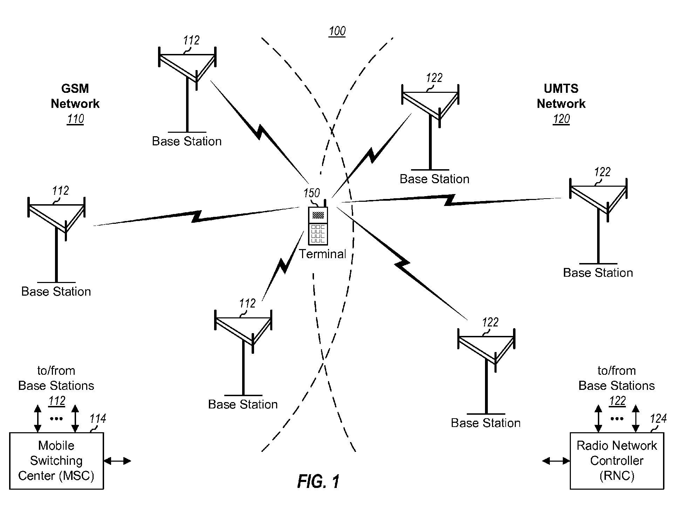

**FIG. 1** illustrates a deployment 100 that includes a GSM network 110 and a UMTS network 120. GSM network 110 includes base stations 112 that communicate with terminals within the coverage area of the GSM network. A base station is a fixed station that communicates with the terminals and may also be called a Node B, a base transceiver station (BTS), an access point, and so on. A mobile switching center (MSC) 114 couples to base stations 112 and provides coordination and control for these base stations. UMTS network 120 includes base stations 122 that communicate with terminals within the coverage area of the UMTS network. A radio network controller (RNC) 124 couples to the base stations 122 and provides coordination and control for these base stations. RNC 124 may communicate with MSC 114 to support inter-working between the UMTS and GSM networks. A wireless network typically includes many cells, where the term "cell" can refer to a base station or the coverage area of the base station, depending on the context in which the term is used. In the following description, base station 112 is also referred to as a GSM cell, and base station 122 is also referred to as a UMTS cell.

A multi-mode terminal 150 (e.g., a dual-mode cellular phone) can communicate with GSM network 110 and UMTS network 120, typically with one wireless network at any given moment. This capability allows a user to obtain the performance advantages of W-CDMA and the coverage benefits of GSM with the same terminal. Terminal 150 may be stationary or mobile and may also be called user equipment (UE), a mobile station (MS), mobile equipment (ME), and so on. Terminal 150 may be a cellular phone, a personal digital assistant (PDA), a wireless modem, a wireless communication device, a subscriber unit, a wireless laptop computer, and so on.

GSM network 110 and UMTS network 120 may belong in the same or different public land mobile networks (PLMNs). A PLMN may comprise one or more wireless networks, e.g., one or more GSM networks and/or one or more UMTS networks. A PLMN is uniquely identified by a specific Mobile Country Code (MCC) and a specific Mobile Network Code (MNC). The UMTS networks and GSM networks for a given PLMN may have overlapping or non-overlapping coverage areas. Multiple PLMNs may also be deployed by different service providers in a given geographic area.

Terminal 150 may be provisioned with a list of preferred PLMNs from which the terminal may receive service. This preferred list may be provisioned by a service provider with which terminal 150 has a subscription. The preferred list normally includes a home PLMN (HPLMN) and other PLMNs for which the service provider has roaming agreements. The preferred list may be stored in a Subscriber Identity Module (SIM), a Universal SIM (USIM), or some other non-volatile memory module. Terminal 150 may also maintain a list of PLMNs that the terminal has found during prior searches. This list of found PLMNs may be stored in an acquisition database in a non-volatile memory.

A PLMN may operate on one or multiple frequency bands. Each wireless network within each PLMN typically operates on one or more specific frequency channels within a specific frequency band. Table 1 lists frequency bands that are commonly used for GSM and UMTS networks.

Table 1

| Frequency Band | Frequency Band | Uplink (MHz) | Downlink (MHz) | Common Name |
|---|---|---|---|---|
|  | UMTS Band I | 1920 - 1980 | 2110-2170 | IMT-2000 |
| GSM 1900 | UMTS Band II | 1850 - 1910 | 1930 - 1990 | PCS |
| GSM 1800 | UMTS Band III | 1710 - 1785 | 1805 - 1880 | DCS |
|  | UMTS Band IV | 1710 - 1770 | 2110 - 2170 |  |
| GSM 850 | UMTS Band V | 824 - 849 | 869 - 894 | Cellular |
|  | UMTS Band VI | 830 - 840 | 875 - 885 |  |
| GSM 900 |  | 890 - 915 | 935 - 960 |  |

A GSM network may operate on any of the frequency bands in Table 1 or some other frequency band, which are collectively called GSM bands. Each GSM band covers a number of 200 KHz radio frequency (RF) channels. Each RF channel is identified by a specific ARFCN (absolute radio frequency channel number). For example, the GSM 900 band covers ARFCNs 1 through 124, the GSM 850 band covers ARFCNs 128 through 251, the GSM 1800 band covers ARFCNs 512 through 885, and the GSM 1900 band covers ARFCNs 512 through 810. The ARFCNs for various GSM bands are given in 3GPP TS 05.05, entitled "Digital cellular telecommunications system (Phase 2+); Radio transmission and reception (Release 1999)," September 2000, which is publicly available. A GSM network typically operates on a specific set of RF channels in a specific GSM band. The RF channels are also referred to as GSM channels and frequency channels.

A UMTS network may operate on any of the frequency bands in Table 1 or some other frequency band, which are collectively called UMTS bands. Each UMTS band may cover multiple UMTS channels that may be spaced apart by approximately 5 MHz. Each UMTS channel has a bandwidth of 3.84 MHz and a center frequency that is given in 200 KHz resolution. Each UMTS channel is identified by a specific channel number, which may be a UARFCN (UTRA ARFCN). The UARFCNs for various UMTS bands are given in 3GPP TS 25.101, entitled "User Equipment (UE) radio transmission and reception (FDD) (Release 7)," March 2006, which is publicly available. A UMTS network typically operates on one or more specific UARFCNs. The UMTS channels are also referred to as W-CDMA channels and frequency channels.

For the cellular band, the UARFCNs for UMTS are related to the ARFCNs for GSM as follows:

$$
\begin{aligned}
UARFCN \quad &= 5 \times \{824.2 + 0.2 \times (ARFCN - 128) + 45\} \\
&= ARFCN + 4218 \quad .
\end{aligned}
\qquad \text{Eq (1)}
$$

The cellular band covers ARFCNs 128 through 251 for GSM and UARFCNs 4357 through 4458 for UMTS on the downlink.

For the Personal Communication System (PCS) band, the UARFCNs for UMTS are related to the ARFCNs for GSM as follows:

$$
\begin{aligned}
UARFCN \quad &= 5 \times \{1850.2 + 0.2 \times (ARFCN - 512) + 80\} \\
&= ARFCN - 9139 \quad .
\end{aligned}
\qquad \text{Eq (2)}
$$

The PCS band covers ARFCNs 512 through 810 for GSM and UARFCNs 9662 through 9938 for UMTS on the downlink. There may be fewer UARFCNs than ARFCNs in a given frequency band because the UARFCNs may be defined for only a portion of the frequency band. For example, UARFCNs are defined for only 871.4 to 891.6 MHz in the cellular band and for only 1932.4 to 1987.6 MHz in the PCS band. Equations (1) and (2) are exemplary conversion formulae for the cellular and PCS bands. Other conversion formulae may also be defined for other frequency bands such as GSM 900, GSM 1800, and so on, and also for other radio technologies, e.g., cdma2000.

As shown in Table 1, GSM and UMTS networks may operate on the same frequency band or overlapping frequency bands. For example, GSM 1900 band and UMTS Band II correspond to the PCS band, and GSM 1800 band and UMTS Band III correspond to the Digital Cellular System (DCS) band.

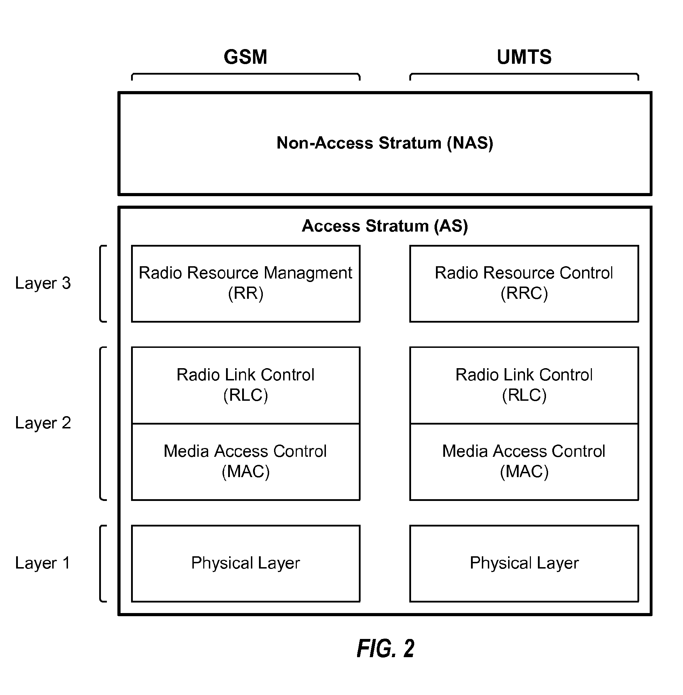

**FIG. 2** illustrates various layers for GSM and UMTS. GSM includes a Non Access Stratum (NAS) and an Access Stratum (AS). The NAS comprises functions and protocols that support traffic and signaling between a terminal and a core network with which a GSM network interfaces. The AS comprises functions and protocols that support communication between the terminal and an MSC within the GSM network. For GSM, the AS includes a Radio Resource (RR) management sublayer, a Radio Link Control (RLC) sublayer, a Medium Access Control (MAC) sublayer, and a physical layer. The RR is a sublayer of Layer 3. The RLC and MAC are sublayers of Layer 2, which is also referred to as a data link layer. The physical layer is also referred to as Layer 1. UMTS similarly includes the NAS and AS. For UMTS, the AS includes a Radio Resource Control (RRC) sublayer at Layer 3, RLC and MAC sublayers at Layer 2, and a physical layer at Layer 1.

The NAS, RRC and RR perform various functions to search for wireless networks and to establish, maintain and terminate calls. For simplicity, only functions related to searches are described below. The terms "search" and "scan" are often used interchangeably. The RRC functions may be implemented by an RRC module within terminal 150, and the RR functions may be implemented by an RR module.

Terminal 150 may perform a manual search or an automatic search to look for PLMNs. Terminal 150 may perform a manual search whenever requested by a user. A goal of the manual search is to return a comprehensive list of all PLMNs found by terminal 150 to the user. Terminal 150 may periodically perform an automatic search if it is camping on a PLMN that is of lower priority than the home PLMN. A goal of the automatic search is to find a PLMN of higher priority than the current serving PLMN. Terminal 150 may perform an automatic search whenever a timer expires. The timer value may be determined by a service provider. For both manual and automatic searches, terminal 150 may perform a search for GSM networks (a GSM search) and/or a search for UMTS networks (a UMTS search). Terminal 150 may perform manual and automatic searches in various manners, as described below.

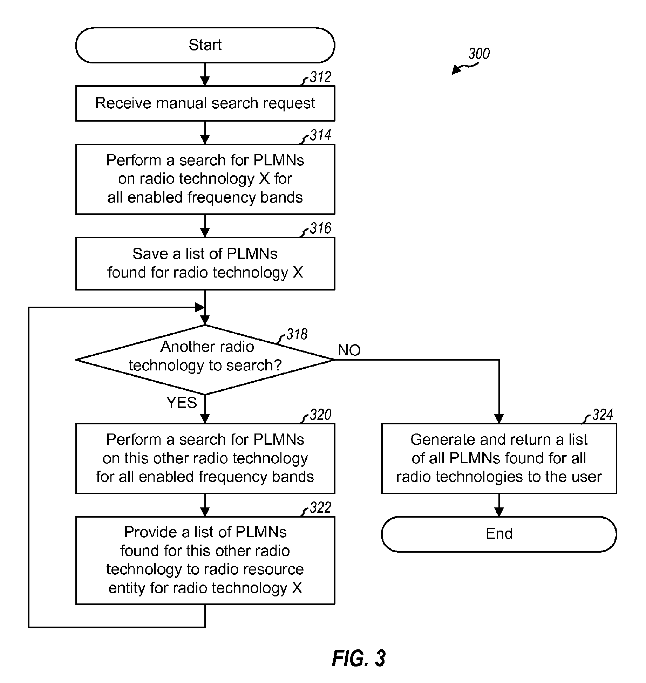

**FIG. 3** illustrates an exemplary manual search process 300 performed by terminal 150. A manual search request is received from the user by a radio resource entity for radio technology X (block 312). The manual search request may be sent to the radio resource entity for the radio technology that terminal 150 is currently camped on or has received service last. The radio resource entity may be the RR for GSM or the RRC for UMTS. Each radio resource entity may perform a search for PLMNs on its radio technology followed by a search for PLMNs on each remaining radio technology supported by terminal 150.

A search for PLMNs on radio technology X is performed for all enabled frequency bands (block 314). The enabled frequency band(s) may be dependent on the capability of terminal 150, the configuration of terminal 150, and/or other factors. The search may be performed for a band group that includes the cellular and PCS bands (which are commonly used in the United States), a band group that includes the IMT-2000 and GSM 1800 bands (which are commonly used in Europe), or some other group of frequency bands. A list of PLMNs found for radio technology X is saved (block 316). A determination is then made whether there is another radio technology to search (block 318). If the answer is 'Yes', then a search for PLMNs on the other radio technology is performed for all enabled frequency bands for this other radio technology (block 320). A list of PLMNs found for this other radio technology is provided to the radio resource entity for radio technology X (block 322). The process then returns to block 318. If the answer is 'No' for block 318, then a list of all PLMNs found for all radio technologies is generated and returned to the user (block 324).

In manual search process 300, a search is performed independently for each radio technology supported by terminal 150. For example, terminal 150 may perform a GSM search followed by a UMTS search if the manual search request is received by the RR for GSM. Terminal 150 may also perform a UMTS search followed by a GSM search if the manual search request is received by the RRC for UMTS.

Terminal 150 may perform a GSM search for a given frequency band (e.g., the cellular band), as follows:

- Perform a power scan and measure the received power of each GSM channel in the frequency band,
- Identify strong GSM channels,
- Attempt acquisition on each strong GSM channel, and
- Report a list of acquired GSM channels with PLMN information.

The power scan provides a received signal strength indicator (RSSI) measurement for each GSM channel in the frequency band. The power scan may be performed relatively quickly, e.g., in several seconds. Strong GSM channels (e.g., those with RSSI measurements above a threshold) are selected for acquisition, and remaining weak GSM channels are discarded. Acquisition of a strong GSM channel may entail (1) detecting for a tone sent on a frequency correction channel (FCCH) and (2) decoding a burst sent on a synchronization channel (SCH) to obtain a base transceiver station identity code (BSIC) for a GSM cell. Acquisition of a strong GSM channel may further entail decoding a broadcast control channel (BCCH) to obtain a System Information Type 3 message (SI3) or a System Information Type 4 message (SI4). The SI3 and SI4 contain information on the PLMN of the GSM cell as well as other information. In general, successful acquisition may be defined by successful FCCH detection, successful FCCH detection and SCH decoding, successful FCCH detection and both SCH and BCCH decoding, or by some other criteria. In any case, the GSM search provides a list of acquired GSM channels. This list may contain zero, one or multiple GSM channels.

Terminal 150 may perform a UMTS search for a given frequency band, as follows:

- Perform a coarse frequency scan and measure the received power at coarse frequencies that are spaced apart by $\Delta f_C$,
- Identify strong coarse frequencies,
- Perform a fine frequency scan for a range of UARFCNs around each strong coarse frequency,
- Identify strong UARFCNs,
- Attempt acquisition on each strong UARFCN, and
- Report a list of acquired UMTS channels with PLMN information.

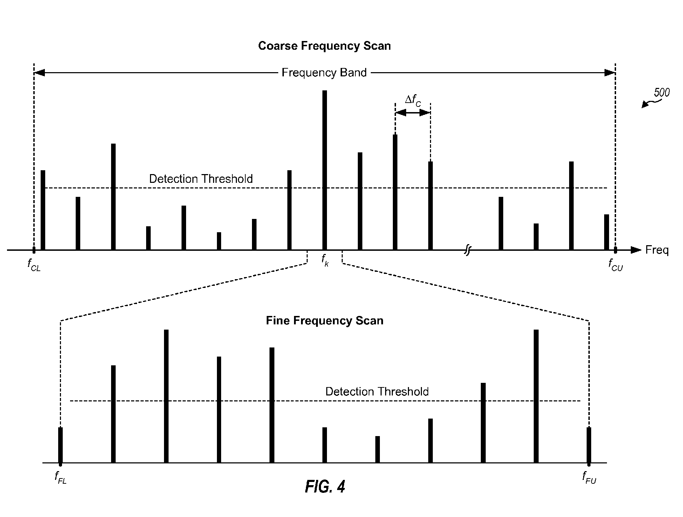

**FIG. 4** illustrates exemplary coarse frequency scan and fine frequency scan for UMTS. A coarse frequency scan may be performed across an entire frequency band of interest, e.g., the PCS band. The coarse frequency scan provides RSSI measurements for coarse frequencies that are spaced apart by $\Delta f_C$. For example, $\Delta f_C$ may be equal to 2 MHz, and a coarse frequency scan for the PCS band may provide 31 RSSI measurements for 31 coarse frequencies at $f_k = 1930 + 2k$ MHz, for $k = 0, ..., 30$. The RSSI measurements may be compared against a detection threshold, and strong coarse frequencies with RSSI measurements above the detection threshold may be selected for further evaluation.

A fine frequency scan may be performed across a frequency range of $f_{FL} = f_k - \Delta f_C/2$ to $f_{FU} = f_k + \Delta f_C/2$ for each strong coarse frequency $f_k$. The fine frequency scan provides RSSI measurements for all UARFCNs within the frequency range. For example, $f_C$ may be equal to 2 MHz, and a fine frequency scan for coarse frequency $f_k$ may provide 11 RSSI measurements for 11 UARFCNs that are separated by 200 KHz. The RSSI measurements for the UARFCNs may be compared against the detection threshold, and strong UARFCNs with RSSI measurements above the detection threshold may be selected for acquisition.

Terminal 150 may attempt acquisition on each strong UARFCN using a three-step process. In step one, terminal 150 searches for a 256-chip primary synchronization code (PSC) sequence sent on a primary synchronization channel (SCH) by correlating the received samples at terminal 150 with a locally generated PSC sequence at different time offsets. Terminal 150 uses the PSC to detect for the presence of a UMTS cell and to ascertain the slot timing of that cell. In step two, terminal 150 determines a pattern of secondary synchronization code (SSC) sequences used by each UMTS cell for which the PSC has been detected. Terminal 150 can determine frame timing and a scrambling code group used for a UMTS cell based on the detected SSC pattern for that cell. In step three, terminal 150 determines the scrambling code used by each UMTS cell for which the SSC pattern has been detected. Each SSC pattern is associated with a group of eight scrambling codes. Terminal 150 evaluates each of the eight scrambling codes to determine which scrambling code is used by the UMTS cell.

As shown in FIG. 4, there may be many UARFCNs to attempt acquisition. As an example, the PCS band covers more than 200 UARFCNs, and acquisition may be attempted on 200 or more UARFCNs in the PCS band. Consequently, a UMTS search may take a long time (e.g., several minutes) to complete.

In an embodiment, results of a GSM search are used to reduce the frequency search space for a UMTS search. The GSM search provides a list of acquired GSM channels. To avoid interference between GSM and UMTS, GSM channels and UMTS channels are typically selected such that they do not overlap one another in frequency. Hence, for each acquired GSM channel, an assumption may be made that no UMTS channel overlaps this GSM channel. The UMTS search may then omit a range of frequencies centered at each acquired GSM channel.

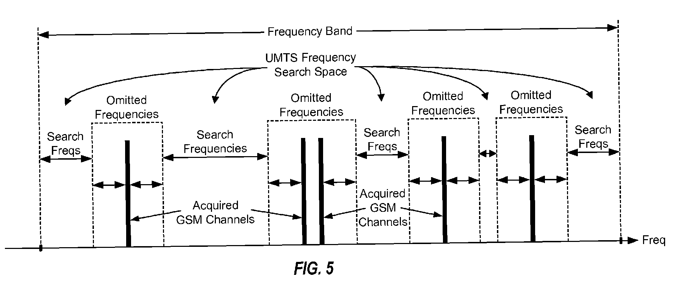

**FIG. 5** illustrates omission of frequencies from a UMTS frequency search space based on results of a GSM search. In this example, five GSM channels are acquired during the GSM search. Each GSM channel has a 3 dB bandwidth of less than 200 KHz, and each UMTS channel has a 3 dB bandwidth of approximately 3.84 MHz. For each acquired GSM channel, a frequency range covering up to 3.84 MHz on each side of the GSM channel may be omitted from the UMTS search. Alternatively, a smaller frequency range may be omitted in order to provide some margins. In an embodiment, for each acquired GSM channel, a frequency range of 6.8 MHz centered at the GSM channel is omitted from the UMTS frequency search space. Other frequency ranges besides 6.8 MHz may also be used.

An omitted frequency space is formed by the union of all omitted frequency ranges centered at the acquired GSM channels. The omitted frequency space includes all frequencies that may be omitted from a UMTS search. A frequency search space for a UMTS search for a given frequency band may then include all frequencies that are not included in the omitted frequency space. Depending on the number of acquired GSM channels and their frequencies, a large portion of the frequency band may be omitted from the frequency search space. A UMTS search may then be performed over the frequency search space in the manner described above, albeit at fewer frequencies for the coarse and fine frequency scans.

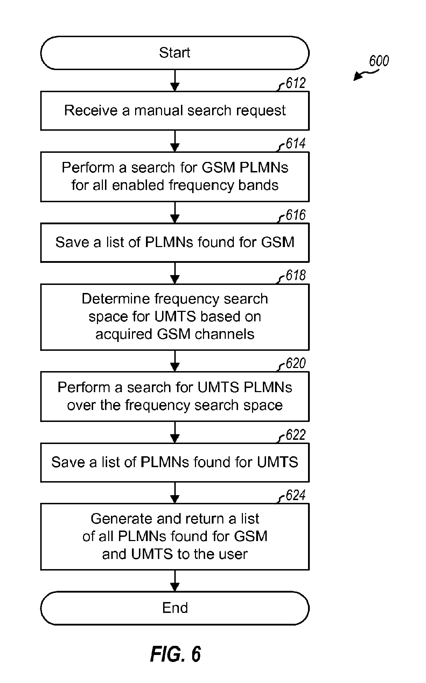

**FIG. 6** illustrates an embodiment of a manual search process 600 that uses search results for GSM to reduce the frequency search space for UMTS. A manual search request is received from the user by a radio resource entity for radio technology X, e.g., the RR for GSM or the RRC for UMTS (block 612). A search for GSM PLMNs is performed for all enabled frequency bands (block 614). A list of PLMNs found for GSM is saved (block 616). The frequency search space for UMTS is determined based on the acquired GSM channels, as described above (block 618). A search for UMTS PLMNs is then performed over the frequency search space (block 620). A list of PLMNs found for UMTS is saved (block 622). A list of all PLMNs found for GSM and UMTS is generated and returned to the user (block 624).

Terminal 150 may be operated in a dual mode, a GSM-only mode, or a UMTS-only mode. Terminal 150 can receive service from GSM or UMTS in the dual mode. The operating mode may be selected by the user or configured by a service provider, e.g., based on the location of terminal 150. Terminal 150 may omit the search for GSM PLMNs in block 614 if it is operating in the UMTS-only mode.

In an embodiment, terminal 150 maintains an acquisition database that includes a list of unique UARFCN/PLMN entries for UMTS channels that have been previously acquired by terminal 150. Each UARFCN/PLMN entry indicates the UARFCN, the scrambling code, and other pertinent information to acquire the associated UMTS channel. The acquisition database may include a predetermined number of (e.g., 10) most recent entries, which may be stored in a circular buffer so that a new entry replaces the oldest entry in the database.

Terminal 150 may attempt acquisition on the UMTS channels in the acquisition database prior to performing a UMTS search. This may be desirable for several reasons. First, terminal 150 has acquired these UMTS channels previously, so the likelihood of acquiring these UMTS channels again may be good. Second, terminal 150 has pertinent information such as scrambling code and may be able to acquire these UMTS channels quickly.

In an embodiment, results of an acquisition database search are used to reduce the frequency search space for a UMTS search. Terminal 150 may attempt acquisition on each UMTS channel in the acquisition database and may or may not successfully acquire the UMTS channel. If the UMTS channel is not acquired, then the UARFCN for this UMTS channel may be omitted from the UMTS search. If the UMTS channel is acquired, then a range of frequencies centered at the acquired UMTS channel may be omitted from the UMTS search.

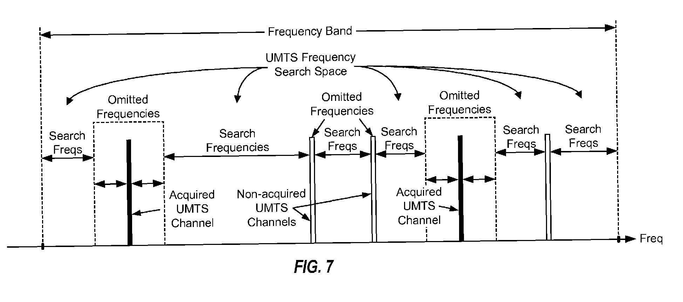

FIG. 7 illustrates omission of frequencies from a UMTS frequency search space based on results of an acquisition database search. In this example, two UMTS channels are acquired and three UMTS channels are not acquired by the acquisition database search. For each acquired UMTS channel, a frequency range covering up to 3.84 MHz on each side of the UARFCN for this UMTS channel may be omitted from the UMTS frequency search space. In an embodiment, for each acquired UMTS channel, a frequency range of 6.8 MHz centered at the UARFCN of the UMTS channel is omitted from the UMTS frequency search space. Other frequency ranges may also be used.

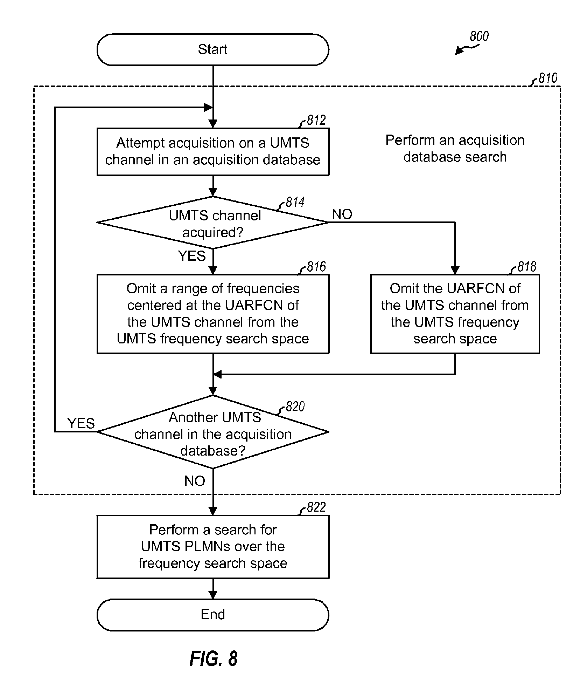

FIG. 8 illustrates an embodiment of a search process 800 that uses results of an acquisition database search to reduce the frequency search space for a UMTS search. An acquisition database search is initially performed (block 810). For block 810, acquisition is attempted on a UMTS channel in the acquisition database (block 812). If acquisition is successful, as determined in block 814, then a range of frequencies centered at the UARFCN of the acquired UMTS channel is omitted from the UMTS frequency search space (block 816). If acquisition is not successful, then the UARFCN of the non-acquired UMTS channel is omitted from the UMTS frequency search space (block 818). A determination is then made whether there is another UMTS channel in the acquisition database to attempt acquisition (block 820). If the answer is 'Yes', then the process returns to block 812 to attempt acquisition on another UMTS channel in the acquisition database. Otherwise, if acquisition has been attempted on all UMTS channels in the acquisition database, then a search for UMTS PLMNs is performed over the frequency search space that has been reduced in block 816 and/or 818 (block 822).

Terminal 150 may periodically perform an automatic search to find PLMNs of higher priority than the current serving PLMN. Since a goal of the automatic search is to find higher priority PLMNs, terminal 150 may search for PLMNs based on their priorities. If a GSM search is performed first because GSM is higher priority, then the results of the GSM search may be used to reduce the frequency search space for a UMTS search.

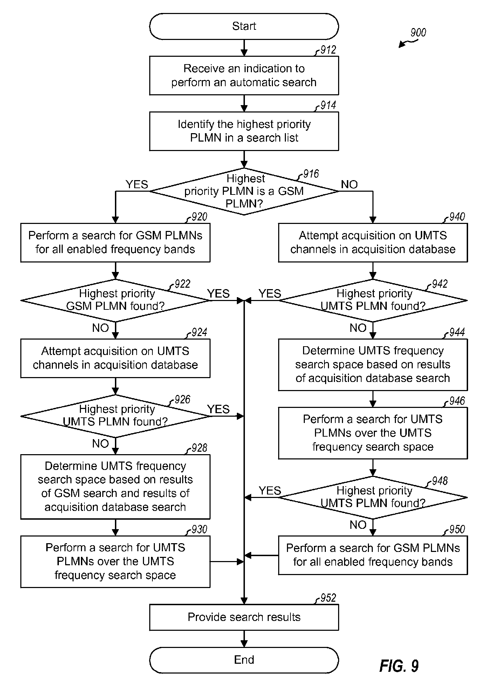

FIG. 9 illustrates an embodiment of an automatic search process 900. An indication to perform an automatic search is received by a radio resource entity (block 912). The indication may be triggered by expiration of the timer used for automatic search. The indication may be sent by upper layer (e.g., NAS) and may include a search list of PLMNs having higher priority than the current PLMN. This search list may be derived from the list of preferred PLMNs provisioned at terminal 150. The highest priority PLMN in the search list is identified (block 914). A determination is then made whether this highest priority PLMN is a GSM PLMN (block 916).

If the highest priority PLMN is a GSM PLMN, then a search for GSM PLMNs is performed for all enabled frequency bands (block 920). All of the GSM channels acquired by the GSM search are checked to determine whether any of these GSM channels is for the highest priority GSM PLMN. A determination is then made whether the highest priority GSM PLMN is found (block 922). If the answer is 'Yes', then the PLMNs found by the GSM search and included in the search list are returned (block 952), and the process terminates. Otherwise, if the highest priority GSM PLMN is not found, then acquisition is attempted on the UMTS channels in the acquisition database (block 924). For the acquisition database search in block 924, the results of the GSM search may be used to omit UMTS channels that overlap the GSM channels acquired by the GSM search. A determination is then made whether the highest priority UMTS PLMN is found (block 926). If the answer is 'Yes', then the PLMNs found by the UMTS search and included in the search list are returned (block 952), and the process terminates. Otherwise, if the highest priority UMTS PLMN is not found, then the frequency search space for a UMTS search is determined based on the results of the GSM search in block 920 and the results of the acquisition database search in block 924 (block 928). A search for UMTS PLMNs is then performed over the UMTS frequency search space (block 930). Any PLMNs found by the UMTS search and included in the search list are returned (block 952), and the process terminates.

If the highest priority PLMN in the search list is a UMTS PLMN, as determined in block 916, then acquisition is attempted on the UMTS channels in the acquisition database (block 940). A determination is then made whether the highest priority UMTS PLMN is found (block 942). If the answer is 'Yes', then the PLMNs found by the acquisition database search and included in the search list are returned (block 952), and the process terminates. Otherwise, if the highest priority UMTS PLMN is not found, then the frequency search space for a UMTS search is determined based on the results of the acquisition database search (block 944). A search for UMTS PLMNs is then performed over the UMTS frequency search space (block 946). A determination is then made whether the highest priority UMTS PLMN is found (block 948). If the answer is 'Yes', then the PLMNs found by the UMTS search and included in the search list are returned (block 952), and the process terminates. Otherwise, if the highest priority UMTS PLMN is not found, then a search for GSM PLMNs is performed for all enabled frequency bands (block 950). For the GSM search in block 950, the results of the acquisition database search and the results of the UMTS search may be used to omit GSM channels that overlap the UMTS channels acquired in prior searches. The PLMNs found by the GSM search and included in the search list are returned (block 952), and the process terminates.

In the embodiment shown in FIG. 9, process 900 terminates when the highest priority PLMN in the search list is found or after both GSM and UMTS have been searched. Process 900 may also terminate when a higher priority PLMN is found and/or some other criterion is met.

In the embodiment shown in FIG. 9, the GSM search, UMTS search, and acquisition database search may be performed in different orders depending on the desired outcome. In general, the results of a given search may be used to reduce the frequency search space for a subsequent search.

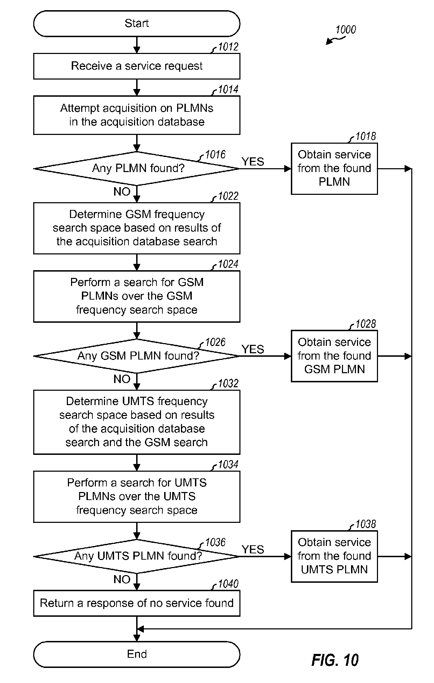

**FIG. 10** illustrates an embodiment of a process 1000 to obtain service from a wireless network. Initially, a service request is received, e.g., upon powered on or loss of service (block 1012). It may be desirable to obtain service from any network, either UMTS or GSM, as quickly as possible. Acquisition is attempted on PLMNs in the acquisition database (block 1014). If any PLMN in the acquisition database is found, as determined in block 1016, then service is obtained from that PLMN (block 1018).

Otherwise, if no PLMN in the acquisition database is found, then a GSM search may be performed first since the GSM search may take a shorter amount of time than a UMTS search, and service may be obtained faster on a GSM PLMN. The frequency search space for a GSM search is determined based on the results of the acquisition database search (block 1022). For example, the UARFCN of each UMTS channel not acquired in block 1014 may be omitted from the GSM frequency search space. A search for GSM PLMNs is then performed over the GSM frequency search space (block 1024). If any GSM PLMN is found, as determined in block 1026, then service is obtained from that PLMN (block 1028).

Otherwise, if no GSM PLMN is found, then the frequency search space for a UMTS search is determined based on the results of the acquisition database search in block 1014 and the results of the GSM search in block 1024 (block 1032). For example, the UARFCN of each UMTS channel not acquired in block 1014 and a range of UARFCNs corresponding to each GSM channel acquired in block 1024 may be omitted from the UMTS frequency search space. A search for UMTS PLMNs is then performed over the UMTS frequency search space (block 1034). If any UMTS PLMN is found, as determined in block 1036, then service is obtained from that PLMN (block 1038). Otherwise, if no UMTS PLMN is found, then a response of no service found is returned (block 1040).

In another embodiment, if no GSM PLMN is found in block 1026, then acquisition is attempted on the PLMNs in the acquisition database prior to performing a UMTS search in block 1034. In yet another embodiment, a UMTS search is performed prior to a GSM search, e.g., if UMTS is preferred over GSM. The searches may also be performed in other orders.

FIGS. 6, 8, 9 and 10 show exemplary search processes for GSM and UMTS. In general, the searches for GSM and UMTS may be performed in any order. The searches may also be performed in response to any triggering event or criteria. For example, process 1000 may also be used for a manual search or an automatic search.

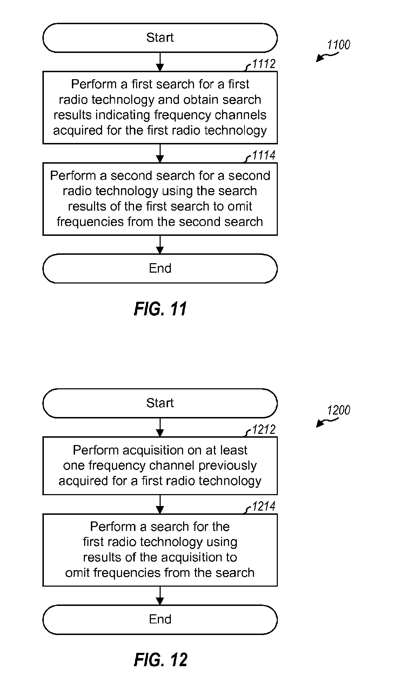

**FIG. 11** illustrates an embodiment of a search process 1100 for multiple radio technologies. A first search for a first radio technology is performed, and search results indicating frequency channels acquired for the first radio technology are obtained (block 1112). A second search for a second radio technology is performed using the search results of the first search to omit frequencies from the second search (block 1114). The first radio technology may have a faster search time than the second radio technology. The first and second radio technologies may be GSM and W-CDMA, respectively, or some other radio technologies.

The first search may comprise obtaining received power measurements for a plurality of frequency channels, attempting acquisition on frequency channels with strong received power measurements, and providing a list of frequency channels successfully acquired for the first radio technology. The first radio technology may be GSM, and each frequency channel with strong received power measurement may be acquired by detecting the FCCH, decoding the SCH, and possibly decoding the BCCH.

A frequency search space may be determined for the second radio technology based on the results of the first search. A range of frequencies may be omitted around each frequency channel successfully acquired for the first radio technology. The second search may then be performed over the frequency search space.

The second search may comprise obtaining received power measurements for a plurality of frequencies that exclude the frequencies omitted from the second search, attempting acquisition on frequency channels centered at frequencies with strong received power measurements, and providing a list of frequency channels successfully acquired for the second radio technology. The received power measurements may be obtained via (1) a coarse frequency scan for a plurality of coarse frequencies that exclude the frequencies omitted from the second search and (2) a fine frequency scan for a plurality of fine frequencies for each coarse frequency with strong received power measurement. The fine frequencies may correspond to UARFCNs in UMTS.

The first and second searches may be performed in response to a request for a list of all available wireless networks, an indication to search for wireless networks with higher priority than the current wireless network, a request for service, and so on.

FIG. 12 illustrates an embodiment of a search process 1200 for a radio technology. Acquisition is performed on at least one frequency channel previously acquired for a first radio technology (block 1212). A search for the first radio technology is then performed using results of the acquisition to omit frequencies from the search (block 1214). For block 1214, the omitted frequencies may include (1) the center frequency of each frequency channel not successfully acquired and (2) a range of frequencies for each frequency channel successfully acquired.

A search for a second radio technology may be performed, and results indicating frequency channels acquired for the second radio technology may be obtained. The search for the first radio technology may then be performed using the results of the acquisition as well as the results of the search for the second radio technology to omit frequencies from the search for the first radio technology. Alternatively, the search for the first radio technology may be performed first, and the results of this search may be used to omit frequencies from the search for the second radio technology. The first and second radio technologies may be W-CDMA and GSM, respectively, or some other radio technologies.

In general, terminal 150 may use results of a search for one radio technology to reduce the search space for another search for the same radio technology or a different radio technology. The first search may be a full search (e.g., a search over an entire frequency band) or a partial search (e.g., acquisition on frequency channels in an acquisition database). The second search may also be a full or partial search. The frequencies to omit from the search space may be dependent on acquired and non-acquired frequency channels for the first search, the bandwidths of frequency channels for the first and second radio technologies, and/or other factors.

In an embodiment, terminal 150 attempts to reduce the search space for each frequency band to be searched based on results of prior searches for that frequency band. In another, terminal 150 attempts to reduce the search space only for crowded frequency bands used for multiple radio technologies. For example, the cellular band, PCS band, GSM 900 band, and GSM 1800 band may be considered as crowded frequency bands since UMTS and GSM networks are both deployed on these frequency bands. The IMT-2000 band is presently not a crowded frequency band since only UMTS networks are currently deployed on this frequency band. Other frequency bands may become crowded in the future as more wireless networks are deployed.

The search techniques described herein may provide substantial reduction in search time. In one exemplary design, the use of GSM search results to reduce the search space for UMTS search provides savings of 10 to 30 seconds in UMTS search time. The amount of improvement may be different for other designs.

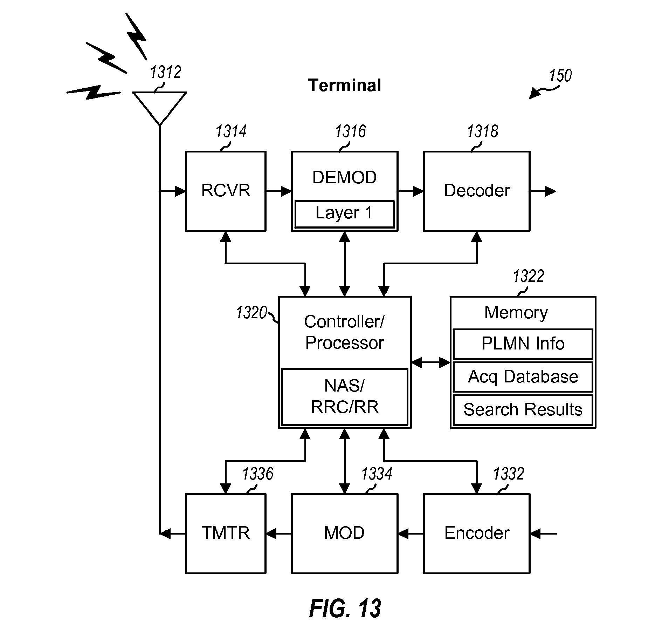

FIG. 13 illustrates a block diagram of an embodiment of terminal 150. On the downlink, an antenna 1312 receives modulated signals from GSM and/or UMTS base stations and provides a received signal to a receiver (RCVR) 1314. Receiver 1314 conditions (e.g., filters, amplifies, and frequency downconverts) the received signal, digitizes the conditioned signal, and provides data samples. A demodulator (DEMOD) 1316 processes (e.g., descrambles, dechannelizes, and demodulates) the data samples and provides symbol estimates, which are estimates of data symbols sent by a base station for terminal 150. A decoder 1318 then processes (e.g., deinterleaves and decodes) the symbol estimates and provides decoded data for terminal 150. The processing by demodulator 1316 and decoder 1318 is typically different for different radio technologies. For example, demodulator 1316 may perform matched filtering and equalization for GSM. Demodulator 1316 may perform descrambling with scrambling sequences, despreading with orthogonal variable spreading factor (OVSF) codes, data demodulation, and so on, for W-CDMA.

On the uplink, traffic data and signaling to be sent by terminal 150 is processed (e.g., encoded and interleaved) by an encoder 1332 and further processed (e.g., modulated, channelized, and scrambled) by a modulator (MOD) 1334 in accordance with the applicable radio technology, e.g., GSM or W-CDMA. A transmitter (TMTR) 1336 conditions (e.g., converts to analog, amplifies, filters, and frequency upconverts) the data chips from modulator 1334 and generates an uplink signal, which is transmitted via antenna 1312 to one or more base stations.

A controller/processor 1320 controls the operation at terminal 150. Controller/processor 1320 may implement process 300, 600, 800, 900, 1000, 1100, 1200 and/or other processes. Controller/processor 1320 may also implement the NAS, the RRC and/or the RR. Controller/processor 1320 may determine when to perform manual search, automatic search, and system search for service and may also determine which PLMNs and which frequency channels and/or frequency bands to search. Controller/ processor 1320 may also direct acquisition database search, GSM search, and UMTS search. Demodulator 1316 may implement Layer 1 for both UMTS and GSM, perform acquisition database search and UMTS search whenever directed by the RRC, provide UMTS search results, perform GSM search whenever directed by the RR, and provide GSM search results. A memory 1322 store data and program codes for terminal 150. Memory 1322 may store PLMN information, the acquisition database, search results, and so on.

For clarity, the search techniques have been specifically described for UMTS and GSM. These techniques may also be used for other networks such as cdma2000 networks, wireless local area networks (WLANs), and so on. These techniques may also be used for more than two radio technologies, e.g., for W-CDMA, GSM, and cdma2000.

The search techniques described herein may be implemented by various means. For example, these techniques may be implemented in hardware, firmware, software, or a combination thereof. For a hardware implementation, the processing units used to perform searches may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, electronic devices, other electronic units designed to perform the functions described herein, or a combination thereof.

For a firmware and/or software implementation, the techniques may be implemented with modules (e.g., procedures, functions, and so on) that perform the functions described herein. The firmware and/or software codes may be stored in a memory (e.g., memory 1322 in FIG. 13) and executed by a processor (e.g., processor 1320). The memory may be implemented within the processor or external to the processor.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the spirit or scope of the invention. Thus, the invention is not intended to be limited to the embodiments shown herein but is to be accorded the widest scope consistent with the principles and novel features disclosed herein.

In the following, further embodiments are described to facilitate understanding:

1. An apparatus comprising:

at least one processor configured to perform a first search for a first radio technology and obtain search results indicating frequency channels acquired for the first radio technology, and to perform a second search for a second radio technology using the search results for the first search to omit frequencies from the second search; and
a memory coupled to the at least one processor.

2. The apparatus of embodiment 1, wherein the first radio technology is GSM and the second radio technology is W-CDMA.

3. The apparatus of embodiment 1, wherein for the first search the at least one processor is configured to obtain received power measurements for a plurality of frequency channels, to attempt acquisition on frequency channels with strong received power measurements, and to provide a list of frequency channels successfully acquired for the first radio technology.

4. The apparatus of embodiment 3, wherein the first radio technology is GSM, and wherein for each frequency channel with strong received power measurement the at least one processor is configured to detect a frequency correction channel (FCCH) and to decode a synchronization channel (SCH) to acquire the frequency channel.

5. The apparatus of embodiment 4, wherein for each frequency channel with strong received power measurement the at least one processor is further configured to decode a broadcast control channel (BCCH) to acquire the frequency channel.

6. The apparatus of embodiment 1, wherein the at least one processor is configured to omit a range of frequencies around each frequency channel successfully acquired for the first radio technology.

7. The apparatus of embodiment 1, wherein the at least one processor is configured to determine a frequency search space for the second radio technology based on the search results for the first search, and to performed the second search over the frequency search space.

8. The apparatus of embodiment 1, wherein for the second search the at least one processor is configured to obtain received power measurements for a plurality of frequencies that exclude the frequencies omitted from the second search, to attempt acquisition on frequency channels centered at frequencies with strong received power measurements, and to provide a list of frequency channels successfully acquired for the second radio technology.

9. The apparatus of embodiment 1, wherein for the second search the at least one processor is configured to perform a coarse frequency scan and obtain received power measurements for a plurality of coarse frequencies that exclude the frequencies omitted from the second search, to perform a fine frequency scan and obtain received power measurements for a plurality of fine frequencies for each coarse frequency with strong received power measurement, and to attempt acquisition on frequency channels centered at fine frequencies with strong received power measurements.

10. The apparatus of embodiment 1, wherein the at least one processor is configured to receive a request for a list of all available wireless networks and to perform the first and second searches in response to the request.

11. The apparatus of embodiment 1, wherein the at least one processor is configured to receive an indication to search for at least one wireless network with higher priority than a current wireless network and to perform the first and second searches in response to the indication.

12. The apparatus of embodiment 1, wherein the at least one processor is configured to omit the frequencies from the second search if the first and second searches are performed for a frequency band in which the first and second radio technologies are both deployed.

13. The apparatus of embodiment 1, wherein the at least one processor is configured to omit the frequencies from the second search if the first and second searches are performed for cellular band, PCS band, GSM 900 band, or GSM 1800 band.

14. A method comprising:

    performing a first search for a first radio technology and obtaining search results indicating frequency channels acquired for the first radio technology; and
    performing a second search for a second radio technology using the search results for the first search to omit frequencies from the second search.

15. The method of embodiment 14, wherein the performing the first search for the first radio technology comprises

    obtaining received power measurements for a plurality of frequency channels,
    attempting acquisition on frequency channels with strong received power measurements, and
    providing a list of frequency channels successfully acquired for the first radio technology.

16. The method of embodiment 14, further comprising:

    omitting a range of frequencies around each frequency channel successfully acquired for the first radio technology.

17. The method of embodiment 14, wherein the performing the second search for the second radio technology comprises

    obtaining received power measurements for a plurality of frequencies that exclude the frequencies omitted from the second search,
    attempting acquisition on frequency channels centered at frequencies with strong received power measurements, and
    providing a list of frequency channels successfully acquired for the second radio technology.

18. An apparatus comprising:

means for performing a first search for a first radio technology and obtaining search results indicating frequency channels acquired for the first radio technology; and

means for performing a second search for a second radio technology using the search results for the first search to omit frequencies from the second search.

19. The apparatus of embodiment 18, further comprising:

means for omitting a range of frequencies around each frequency channel successfully acquired for the first radio technology.

20. A processor readable media for storing instructions operable to:

direct a first search for a first radio technology and obtain search results indicating frequency channels acquired for the first radio technology; and

direct a second search for a second radio technology using the search results for the first search to omit frequencies from the second search.

21. The processor readable media of embodiment 20, and further for storing instructions operable to:

omit a range of frequencies around each frequency channel successfully acquired for the first radio technology.

22. An apparatus comprising:

at least one processor configured to perform acquisition on at least one frequency channel previously acquired for a first radio technology, and to perform a search for the first radio technology using results of the acquisition to omit frequencies from the search; and

a memory coupled to the at least one processor.

23. The apparatus of embodiment 22, wherein the at least one processor is configured to omit a center frequency of each frequency channel not successfully acquired and to omit a range of frequencies for each frequency channel successfully acquired.

24. The apparatus of embodiment 22, wherein the at least one processor is configured to perform a search for a second radio technology and obtain results indicating frequency channels acquired for the second radio technology, and to perform the search for the first radio technology using the results of the acquisition and the results of the search for the second radio technology to omit frequencies from the search for the first radio technology.

25. The apparatus of embodiment 24, wherein the at least one processor is configured to omit a range of frequencies around each frequency channel successfully acquired for the second radio technology.

26. The apparatus of embodiment 24, wherein the first radio technology is W-CDMA and the second radio technology is GSM.

27. The apparatus of embodiment 22, wherein the at least one processor is configured to receive a request to look for service and to perform the acquisition and the search in response to the request.

28. The apparatus of embodiment 22, wherein the at least one processor is configured to receive an indication to search for at least one wireless network with higher priority than a current wireless network and to perform the acquisition and the search in response to the indication.

29. A method comprising:

performing acquisition on at least one frequency channel previously acquired for a first radio technology; and

performing a search for the first radio technology using results of the acquisition to omit frequencies from the search.

30. The method of embodiment 29, further comprising:

omitting a center frequency of each frequency channel not successfully acquired; and
omitting a range of frequencies for each frequency channel successfully acquired.

31. The method of embodiment 29, further comprising:

performing a search for a second radio technology and obtaining results indicating frequency channels acquired for the second radio technology, and
wherein the search for the first radio technology is performed using the results of the acquisition and the results of the search for the second radio technology to omit frequencies from the search for the first radio technology.

32. An apparatus comprising:

means for performing acquisition on at least one frequency channel previously acquired for a first radio technology; and
means for performing a search for the first radio technology using results of the acquisition to omit frequencies from the search.

33. The apparatus of embodiment 32, further comprising:

means for omitting a center frequency of each frequency channel not successfully acquired; and
means for omitting a range of frequencies for each frequency channel successfully acquired.

34. The apparatus of embodiment 32, further comprising:

means for performing a search for a second radio technology and obtaining results indicating frequency channels acquired for the second radio technology, and wherein the search for the first radio technology is performed using the results of the acquisition and the results of the search for the second radio technology to omit frequencies from the search for the first radio technology.

35. A processor readable media for storing instructions operable to:

direct acquisition on at least one frequency channel previously acquired for a first radio technology; and
direct a search for the first radio technology using results of the acquisition to omit frequencies from the search.

36. The processor readable media of embodiment 35, and further for storing instructions operable to:

omit a center frequency of each frequency channel not successfully acquired; and
omit a range of frequencies for each frequency channel successfully acquired.

37. The processor readable media of embodiment 35, and further for storing instructions operable to:

direct a search for a second radio technology and obtain results indicating frequency channels acquired for the second radio technology, and
direct the search for the first radio technology using the results of the acquisition and the results of the search for the second radio technology to omit frequencies from the search for the first radio technology.

**Claims**

1. An apparatus comprising:

means for performing (1212) acquisition on at least one frequency channel previously acquired for a first radio technology, wherein the at least one frequency channel previously acquired is stored in an acquisition database; and
means for performing (1214) a search for the first radio technology using results of the acquisition to omit frequencies from the search.

2. The apparatus of claim 1, further comprising:

means for omitting a center frequency of each frequency channel not successfully acquired; and
means for omitting a range of frequencies for each frequency channel successfully acquired.

3. The apparatus of claim 1, further comprising:

means for performing a search for a second radio technology and obtaining results indicating frequency channels acquired for the second radio technology, and wherein the search for the first radio technology is performed using the results of the acquisition and the results of the search for the second radio technology to omit frequencies from the search for the first radio technology.

4. The apparatus of claim 1, comprising:

at least one processor (1320) configured to perform the acquisition on at least one frequency channel previously acquired for a first radio technology, and to perform the search for the first radio technology using results of the acquisition to omit frequencies from the search; and
a memory (1322) coupled to the at least one processor (1320).

5. The apparatus of claim 4, wherein the at least one processor is configured to omit a center frequency of each frequency channel not successfully acquired and to omit a range of frequencies for each frequency channel successfully acquired.

6. The apparatus of claim 4, wherein the at least one processor is configured to perform a search for a second radio technology and obtain results indicating frequency channels acquired for the second radio technology, and to perform the search for the first radio technology using the results of the acquisition and the results of the search for the second radio technology to omit frequencies from the search for the first radio technology.

7. The apparatus of claim 6, wherein the at least one processor is configured to omit a range of frequencies around each frequency channel successfully acquired for the second radio technology.

8. The apparatus of claim 6, wherein the first radio technology is W-CDMA and the second radio technology is GSM.

9. The apparatus of claim 4, wherein the at least one processor is configured to receive a request to look for service and to perform the acquisition and the search in response to the request.

10. The apparatus of claim 4, wherein the at least one processor is configured to receive an indication to search for at least one wireless network with higher priority than a current wireless network and to perform the acquisition and the search in response to the indication.

11. A method comprising:

performing (1212) acquisition on at least one frequency channel previously acquired for a first radio technology, wherein the at least one frequency channel previously acquired is stored in an acquisition database; and
performing (1214) a search for the first radio technology using results of the acquisition to omit frequencies from the search.

12. The method of claim 11, further comprising:

omitting a center frequency of each frequency channel not successfully acquired; and
omitting a range of frequencies for each frequency channel successfully acquired.

13. The method of claim 11, further comprising:

performing a search for a second radio technology and obtaining results indicating frequency channels acquired for the second radio technology, and
wherein the search for the first radio technology is performed using the results of the acquisition and the results of the search for the second radio technology to omit frequencies from the search for the first radio technology.

14. A processor readable media for storing instructions operable to perform the steps of the method according to any of the claims 11 to 13.

_100_

_112_

**GSM
Network**
_110_

Base Station

_112_

Base Station

_122_

**UMTS
Network**
_120_

Base Station

_150_

_122_

Base Station

Terminal

_112_

Base Station

_122_

Base Station

to/from
Base Stations
_112_
• • •  _114_

Mobile
Switching
Center (MSC)

**_FIG. 1_**

to/from
Base Stations
_122_
• • •  _124_

Radio Network
Controller
(RNC)

**GSM**                    **UMTS**

| Non-Access Stratum (NAS) | |
|---|---|
| **Access Stratum (AS)** | |

Layer 3

| Radio Resource Managment (RR) | Radio Resource Control (RRC) |
|---|---|

Layer 2

| Radio Link Control (RLC) | Radio Link Control (RLC) |
|---|---|
| Media Access Control (MAC) | Media Access Control (MAC) |

Layer 1

| Physical Layer | Physical Layer |
|---|---|

*FIG. 2*

EP 2 184 938 A1

```
                    ┌─────────────────────────┐
                    │          Start          │
                    └─────────────────────────┘
                                 │
                                 ▼              ⌐312
        ┌──────────────────────────────────────────┐
        │      Receive manual search request       │
        └──────────────────────────────────────────┘
                                 │
                                 ▼              ⌐314
        ┌──────────────────────────────────────────┐
        │        Perform a search for PLMNs         │
        │        on radio technology X for          │
        │        all enabled frequency bands        │
        └──────────────────────────────────────────┘
                                 │
                                 ▼              ⌐316
        ┌──────────────────────────────────────────┐
        │          Save a list of PLMNs             │
        │       found for radio technology X        │
        └──────────────────────────────────────────┘
```

Another radio technology to search? ⌐318    NO

Perform a search for PLMNs on this other radio technology for all enabled frequency bands ⌐320

Provide a list of PLMNs found for this other radio technology to radio resource entity for radio technology X ⌐322

YES

Generate and return a list of all PLMNs found for all radio technologies to the user ⌐324

End

300

**FIG. 3**

18

**Coarse Frequency Scan**

**Fine Frequency Scan**

FIG. 4

FIG. 5

Start

Receive a manual search request ⌐612

Perform a search for GSM PLMNs for all enabled frequency bands ⌐614

Save a list of PLMNs found for GSM ⌐616

Determine frequency search space for UMTS based on acquired GSM channels ⌐618

Perform a search for UMTS PLMNs over the frequency search space ⌐620

Save a list of PLMNs found for UMTS ⌐622

Generate and return a list of all PLMNs found for GSM and UMTS to the user ⌐624

End

**FIG. 6**

600

*FIG. 7*

EP 2 184 938 A1

FIG. 8

EP 2 184 938 A1

Start

Receive an indication to
perform an automatic search
*912*

Identify the highest priority
PLMN in a search list
*914*

Highest
priority PLMN is a GSM
PLMN?
*916*

YES

NO

Perform a search for GSM PLMNs
for all enabled frequency bands
*920*

Attempt acquisition on UMTS
channels in acquisition database
*940*

Highest priority
GSM PLMN found?
*922*

YES

YES

Highest priority
UMTS PLMN found?
*942*

NO

NO

Attempt acquisition on UMTS
channels in acquisition database
*924*

Determine UMTS frequency
search space based on results
of acquisition database search
*944*

Highest priority
UMTS PLMN found?
*926*

YES

Perform a search for UMTS
PLMNs over the UMTS
frequency search space
*946*

NO

Determine UMTS frequency
search space based on results
of GSM search and results of
acquisition database search
*928*

YES

Highest priority
UMTS PLMN found?
*948*

NO

Perform a search for UMTS
PLMNs over the UMTS
frequency search space
*930*

Perform a search for GSM PLMNs
for all enabled frequency bands
*950*

Provide search results
*952*

End

*FIG. 9*

*900*

24

Start

Receive a service request _1012_

Attempt acquisition on PLMNs in the acquisition database _1014_

Any PLMN found? _1016_

NO → Determine GSM frequency search space based on results of the acquisition database search _1022_

YES → Obtain service from the found PLMN _1018_

Perform a search for GSM PLMNs over the GSM frequency search space _1024_

Any GSM PLMN found? _1026_

NO → Determine UMTS frequency search space based on results of the acquisition database search and the GSM search _1032_

YES → Obtain service from the found GSM PLMN _1028_

Perform a search for UMTS PLMNs over the UMTS frequency search space _1034_

Any UMTS PLMN found? _1036_

NO → Return a response of no service found _1040_

YES → Obtain service from the found UMTS PLMN _1038_

End

_1000_

**FIG. 10**

EP 2 184 938 A1

```
          ┌─────────────────────────┐
          │          Start          │                    1100
          └─────────────────────────┘
                      │                    1112
          ┌─────────────────────────┐
          │  Perform a first search for a first  │
          │ radio technology and obtain search │
          │ results indicating frequency channels │
          │ acquired for the first radio technology │
          └─────────────────────────┘
                      │                    1114
          ┌─────────────────────────┐
          │ Perform a second search for a second │
          │  radio technology using the search   │
          │   results of the first search to omit │
          │  frequencies from the second search  │
          └─────────────────────────┘
                      │
          ┌─────────────────────────┐
          │           End           │
          └─────────────────────────┘
```

**FIG. 11**

```
          ┌─────────────────────────┐
          │          Start          │                    1200
          └─────────────────────────┘
                      │                    1212
          ┌─────────────────────────┐
          │   Perform acquisition on at least    │
          │  one frequency channel previously    │
          │  acquired for a first radio technology │
          └─────────────────────────┘
                      │                    1214
          ┌─────────────────────────┐
          │     Perform a search for the         │
          │    first radio technology using      │
          │    results of the acquisition to     │
          │  omit frequencies from the search    │
          └─────────────────────────┘
                      │
          ┌─────────────────────────┐
          │           End           │
          └─────────────────────────┘
```

**FIG. 12**

FIG. 13

Europäisches
Patentamt

European
Patent Office

Office européen
des brevets

# EUROPEAN SEARCH REPORT

Application Number

EP 10 15 5062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/224684 A1 (DORSEY DONALD A [US] ET AL) 11 November 2004 (2004-11-11) | 1,11,14 | INV.<br>H04W48/18 |
| Y | * paragraph [0002] - paragraph [0003] *<br>* paragraph [0010] *<br>* paragraph [0013] - paragraph [0019] *<br>* paragraph [0028] - paragraph [0032] *<br>* figures 1,3 * | 2-10, 12-13 | |
| Y | "Digital cellular telecommunications system (Phase 2+); Universal Mobile Telecommunications System (UMTS); Non-Access-Stratum (NAS) functions related to Mobile Station (MS) in idle mode (3GPP TS 23.122 version 7.3.0 Release 7); ETSI TS 123 122"<br>ETSI STANDARDS, EUROPEAN TELECOMMUNICATIONS STANDARDS INSTITUTE, SOPHIA-ANTIPO, FR,<br>vol. 3-CN1, no. V730,<br>September 2005 (2005-09), XP014032445<br>ISSN: 0000-0001<br>* paragraph 4.4<br>Figures 1 and 2a * | 2-10, 12-13 | |
| A | US 2004/224689 A1 (RAGHURAM SHARADA [US] ET AL) 11 November 2004 (2004-11-11)<br>* paragraph [0003] - paragraph [0005] *<br>* paragraph [0010] *<br>* paragraph [0018] - paragraph [0023] * | 1-14 | |
| A | US 2003/129971 A1 (GOPIKANTH VENKAT [US]) 10 July 2003 (2003-07-10)<br>* paragraph [0002] - paragraph [0005] *<br>* paragraph [0016] *<br>* paragraph [0037] - paragraph [0038] *<br>* figure 4 * | 1-14 | |

TECHNICAL FIELDS
SEARCHED (IPC)

H04Q

-/--

The present search report has been drawn up for all claims

| Place of search | Date of completion of the search | Examiner |
|---|---|---|
| Munich | 25 March 2010 | Rabe, Marcus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 10 15 5062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 00/54542 A (MOTOROLA INC [US]) 14 September 2000 (2000-09-14) * page 2, line 31 - page 4, line 34 * * figure 1 * ----- | 1-14 | |

TECHNICAL FIELDS SEARCHED (IPC)

The present search report has been drawn up for all claims

| Place of search | Date of completion of the search | Examiner |
|---|---|---|
| Munich | 25 March 2010 | Rabe, Marcus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 5062

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2010

| Patent document cited in search report | | Publication date | Patent family member(s) | | | Publication date |
|---|---|---|---|---|---|---|
| US 2004224684 | A1 | 11-11-2004 | AT | 412314 | T | 15-11-2008 |
| | | | BR | PI0410115 | A | 09-05-2006 |
| | | | CN | 1774940 | A | 17-05-2006 |
| | | | EP | 1621030 | A2 | 01-02-2006 |
| | | | ES | 2314424 | T3 | 16-03-2009 |
| | | | JP | 2007500484 | T | 11-01-2007 |
| | | | KR | 20060008986 | A | 27-01-2006 |
| | | | MX | PA05011985 | A | 02-02-2006 |
| | | | US | 2007202875 | A1 | 30-08-2007 |
| | | | WO | 2004102927 | A2 | 25-11-2004 |
| US 2004224689 | A1 | 11-11-2004 | CN | 1774941 | A | 17-05-2006 |
| | | | EP | 1621029 | A2 | 01-02-2006 |
| | | | KR | 20060008989 | A | 27-01-2006 |
| | | | WO | 2004102926 | A2 | 25-11-2004 |
| US 2003129971 | A1 | 10-07-2003 | AU | 2002360841 | A1 | 30-07-2003 |
| | | | WO | 03061325 | A1 | 24-07-2003 |
| WO 0054542 | A | 14-09-2000 | BR | 0008575 | A | 22-01-2002 |
| | | | CA | 2367071 | A1 | 14-09-2000 |
| | | | CN | 1343434 | A | 03-04-2002 |
| | | | MX | PA01009064 | A | 27-03-2002 |
| | | | US | 6148203 | A | 14-11-2000 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 78027006 P